# EUROPÄISCHE PATENTANMELDUNG

(11) **EP 0 971 332 A1**
(43) Veröffentlichungstag der Anmeldung: **12.01.2000**
(21) Anmeldenummer: 98113917.3
(22) Anmeldetag: 24.07.1998
(51) Int. Cl.: G09F 3/00, G04B 47/00

(54) **Körperband**

(30) Priorität: 09.07.1998 EP 98112786
(71) Anmelder: Promotec GmbH, 80796 München (DE)
(72) Erfinder: Lommerzheim, Robert, 80801 München (DE)
(74) Vertreter: Hirsch, Peter

(57) **Zusammenfassung**

Körperband, das am menschlichen oder tierischen Körper zu tragen ist, mit mindestens einer Aufnahmevorrichtung (24; 27; 61) zur Aufnahme mindestens eines Chips (13) mit integrierter elektrischer Schaltung, der über elektrische Kontakte oder berührungslos mit externen Signalquellen und/oder Signalempfängern in Signalaustausch bringbar ist.

## Beschreibung

Die Erfindung betrifft ein Körperband, das am menschlichen oder tierischen Körper zu tragen ist.

Es kommen zunehmend Chipkarten in Gebrauch, welche die Form einer telefonkarten- oder scheckkartengroßen Plastikkarte haben, auf welcher ein Chip mit einer im allgemeinen monolithisch integrierten elektrischen Schaltung untergebracht ist. Dieser Chip ist entweder über elektrische Kontakte oder berührungslos mit externen Signalquellen und/oder Signalempfängern in Signalaustausch bringbar. Ein berührungsloser Signalaustausch ist über Spulen induktiv oder über Antennen mittels Funkwellen möglich. Über diese berührungslose Übertragungsstrecke kann die integrierte Schaltung auf dem Chip auch mit elektrischer Betriebsenergie versorgt werden.

Derartige Chips können auch auf Chipträgern z. B. nach Art von sogenannten SIM (Subscriber Identification Module) untergebracht werden. Dabei handelt es sich um Träger standardisierter Außenabmessungen, welche in elektronische Geräte, beispielsweise Mobiltelefongeräte (Handies), eingesetzt werden können.

Berührungslos betreibbare Chipkarten im Telefonkartenformat können beispielsweise zur einfachen Erfassung von Eintritts-, Fahrt- und Flugkosten, Arbeitszeitkonten, Fluglinien-Bonussystemen usw. verwendet werden. Beispielsweise gibt es U-Bahn-Systeme, für welche anstelle von Fahrkarten Chipkarten verwendet werden, die auf einen bestimmten Geldbetrag aufgeladen sind, von dem der jeweils fällige Fahrpreis subtrahiert wird, wenn der Benutzer eine Fahrtkostenerfassungsstelle passiert.

Derartige Chipkarten werden - wie auch Kreditkarten, Scheckkarten, Telefonkarten, Bankenkassenkarten usw. - in Brieftaschen aufbewahrt, die mit einer Anzahl entsprechender Einsreckfächer ausgerüstet sind.

Die berührungslose Signalübertragung mit solchen berührungslos arbeitenden Chipkarten funktioniert zwar so gut, daß es nicht erforderlich ist, die Chipkarte aus der Brieftasche zu entnehmen und in die Nähe eines als Signalquelle und/oder Signalempfänger dienenden Lesegerätes zu halten. Es ist oftmals noch nicht einmal erforderlich, die Brieftasche aus der Tasche zu nehmen, um diese in den Bereich des Lesegerätes zu halten. Der Signalaustausch funktioniert häufig schon dann, wenn der Besitzer der entsprechenden Chipkarte nur in der Nähe des Lesegerätes vorbeigeht, während er die Brieftasche mit den darin eingesteckten Chipkarten bei sich trägt. Auch sind die Lesegeräte dazu in der Lage, bei Aufbewahrung mehrerer Chipkarten in der Brieftasche mit der richtigen Chipkarte zu korrespondieren.

Die Anzahl der Chipkarten, die man heutzutage bei sich haben muß, um an allen Aktionen teilnehmen zu können, die heutzutage über Chipkarten abgewickelt werden, nimmt laufend zu. Man muß daher eine immer größer werdende Anzahl von Chipkarten mit sich tragen. Diese bilden in den Aufbewahrungsfächern von Brieftaschen oder Geldbörsen einen zunehmend dicker werdenden Stapel, so daß es zunehmend unbequemer und lästiger wird, derartige Brieftaschen oder Geldbörsen in Taschen von Kleidungsstücken, beispielsweise Jackettaschen oder Hosengesäßtaschen, mit sich zu tragen. Außerdem ist das Risiko, eine solche Brieftasche oder Geldbörse zu verlieren oder von Taschendieben entwendet zu bekommen, recht groß, insbesondere da solche entsprechend dicken Brieftaschen oder Geldbörsen von Taschendieben leicht auszumachen sind.

Der Erfindung liegt die Aufgabe zugrunde, eine bequemere und verlier- und entwendungssicherere Aufbewahrungsmethode für derartige Chips zu schaffen.

Diese Aufgabe wird erfindungsgemäß gelöst mit einem Körperband nach Anspruch 1, also mit einem am menschlichen oder tierischen Körner zu tragenden Körperband mit mindestens einer Aufnahmevorrichtung zur Aufnahme mindestens eines Chips mit integrierter elektrischer Schaltung, der über elektrische Kontakte oder berührungslos mit externen Signalquellen und/oder Signalempfängern in Signalaustausch bringbar ist.

Vorteilhafte Weiterbildungen eines erfindungsgemäßen Körperbandes sind in den Ansprüchen 2 bis 9, 12 und 13 angegeben. Ansprüche 10 und 11 sind auf einen Anhänger bzw. ein Schlaufenstück mit Chipaufnahmevorrichtung für die Anbringung an einem Körperband gerichtet.

Ein Körperband, insbesondere in Form eines Armbandes, vorzugsweise Uhrenarmbandes, trägt heutzutage so gut wie jede Person. Man nutzt also erfindungsgemäß als Chipaufbewahrungsvorrichtung einen Gegenstand aus, der sowieso mitgeführt wird. Dabei werden die Chips in Chipkapseln eingesetzt, die aufgrund der relativ Meinen Abmessungen der Chips im Verhältnis zu Chipkarten im Telefonkartenformat sehr klein sein können. Es besteht auch die Möglichkeit, Chips ohne Träger in ein Körperband zu integrieren, z.B. direkt beim Körperbandhersteller. Daher kann man beispielsweise in einem Armband eine beträchtliche Anzahl von Chips unterbringen. Aber auch die beispielsweise in Mobiltelefongeräten verwendeten, abmessungsmäßig genormten Chipträger sind so klein, daß davon mehrere problemlos in einem Armband unterbringbar sind.

Besonders vorteilhaft ist diese erfindungsgemäße Chip-Aufbewahrung für berührungslos betreibbare Chips.

Man kann in einem Körperband als Chipaufbewahrungsvorrichtung aber auch über elektrische Kontakte betreibbare Chips unterbringen. In diesem Fall kann man auf der Außenseite der Aufnahmevorrichtung des Körperbandes, in welcher ein solcher Chip aufgenommen wird, elektrische Kontakte vorsehen, die mit den elektrischen Kontakten auf dem Chip in elektrischer Verbindung stehen und mit den elektrischen Kontakten eines entsprechenden Lesegerätes in Berührung gebracht werden können.

Die Aufnahmevorrichtungen an erfindungsgemäßen Körperbändern können als Steckfächer, die beispielsweise eine mit einem verrastbaren Verschlußstöpsel oder einen Chiptragrahmen verschließbare Einstecköffnung besitzen, oder als Einlegefächer, die beispielsweise mittels eines verrastbaren Schwenkdeckels verschließbar sind, ausgebildet sein. Es besteht auch die Möglichkeit, das gesamte Körperband oder einen Teil davon zweilagig auszubilden, derart, daß zwei voneinander lösbare Bandlagen vorgesehen sind, die aufeinandergelegt und dann miteinander verbunden werden können, nachdem zwischen diese beiden Bandlagen Chips gelegt worden sind. Das Verbinden der beiden Bandlagen kann beispielsweise mittels Rastnoppen in der einen Bandlage und entsprechenden Rastlöchern in der anderen Bandlage geschehen. Bei Bestückung des Körperbandes mit Chips beim Körperbandhersteller können die Chips auch in gieß- oder spritzfähiges Körperbandmaterial eingegossen oder eingespritzt werden.

Bei einer bevorzugten Ausführungsform der Erfindung wird als Körperband das Uhrenarmband einer Uhr verwendet. Dabei kann eine Anzeigevorrichtung der Uhr in das Uhrenarmband integriert sein, wie es in der gleichzeitig eingereichten Patentanmeldung "In ein Armband integriertes Anzeigegerät" (mit dem Anwalts-Aktenzeichen K 47 788/6) näher erläutert ist.

Es besteht auch die Möglichkeit, die Aufnahmevorrichtung für mindestens einen Chip als Anhänger auszubilden, der an dem Körperband befestigt werden kann. Ein solcher Anhänger kann an einem Schmuckarmband oder einem Uhrenarmband befestigt werden, beispielsweise auch nachträglich.

Das Körperband kann auch mit einer Anzeigevorrichtung ausgerüstet sein, auf welcher sich beliebige Daten darstellen lassen, beispielsweise aus einer Datenbank aufgerufene Daten oder von einer externen Signalquelle empfangene Daten. Als interner Datenbankspeicher oder als Verarbeitungseinrichtung für Signale, die mit externen Signalquellen und/oder Signalempfängern ausgetauscht werden, können in dem Körperband untergebracht Chips dienen. Diese wiederum können mit der Anzeigevorrichtung des Körperbandes bzw. einer Steuer- und Treiberschaltung dieser Anzeigevorrichtung, über elektrische Kontakte oder berührungslos im Signalaustausch stehen.

Ein erfindungsgemäßes Körperband kann aus flexiblem Material bestehen, beispielsweise aus flexiblem Kunststoff, Leder, Textil oder ähnlichen Materialien. Es kann aber auch aus steifen oder im wesentlichen steifen Materialien bestehen, beispielsweise aus starrem Kunststoff, Metall, Keramik oder ähnlichen Materialien.

Man kann die Chipaufnahmevorrichtungen auch in schlauch- oder hülsenförmigen Schlaufenstücken ausbilden, die auf ein Körperband durch Aufschieben oder Aufstülpen aufmontierbar sind und das Körperband mindestens teilweise umgreifen. Ein solches Schlaufenstück kann ringförmig geschlossen oder offen sein und mit mindestens einer Aufnahmevorrichtung zur Aufnahme mindestens eines Chips mit integrierter elektrischer Schaltung, der über elektrische Kontakte oder berührungslos mit externen Signalquellen und/oder Signalempfängern in Signalaustausch bringbar ist, bestückt sein. Ist das Schlaufenstück als offener Ring ausgebildet, sollte es mit elastisch federndem Material aufgebaut sein, um auf das Körperband aufschnappbar zu sein, oder aus einem in eine bleibende Form verbiegbaren Material aufgebaut sein, um in bleibender Form mindestens teilweise um das Körperband herumgebogen und damit an dem Körperband befestigt werden zu können.

Ein solches als Chipaufnahmevorrichtung dienendes Schlaufenstück hat den Vorteil, daß es nachträglich an praktisch jedem Körper- oder Uhrband montierbar ist, ohne an dem Körper- oder Uhrband selbst irgendwelche Veränderungen vornehmen zu müssen. Als Chipaufnahmevorrichtung lassen sich auch Bandhalteschlaufen verwenden, wie sie bei vielen Uhrenarmbändern mit Schließe ohnehin vorhanden sind, um das aus der Schließe hervorstehende Bandende zu halten.

Eine Chipaufnahmevorrichtung in Form eines Schlaufenstücks hat den weiteren Vorteil, daß man an dem Design des Körper- oder Uhrenarmbandes keine Änderung vorzunehmen braucht. Dies kann erwünscht sein bei exclusiven oder teuren Uhrenarmband-Designs. Ein Schlaufenstück in Form eines neutralen Aufschiebers stört das Design des Armbandes nicht oder kaum und kann in weniger Varianten für eine größere Anzahl verschiedener Körper- oder Uhrenarmbänder verwendet werden. Es besteht auch die Möglichkeit, das Schlaufenstück mit einem Werbeaufdruck zu versehen, zum Beispiel in Form des Logos einer Fluglinie, deren Meilenansparsystem ein in dem Schlaufenstück untergebrachter Chip unterstützt.

Arbeitet der in der Chipaufnahmevorrichtung untergebrachte Chip mit einem externen System derart zusammen, daß der Chip in ein Lesegerät eingebracht werden muß, beispielsweise um den Chip im Zusammenhang mit einem Fahrpreis-Zahlungssystem wieder aufzuladen, mag es mitunter einfacher sein, das Schlaufenstück vorübergehend vom Körperband abzunehmen und in das Lesegerät einzubringen als eine ganze Uhr mit Armband.

Die Montage der Chips in oder an einem Körperband, einem Chipanhänger oder einem Schlaufenstück kann vom Benutzer des Körperbandes erfolgen oder auch werkseitig beim Körperbandhersteller. Der Körperbandhersteller kann beispielsweise einen Satz gängiger Chips montieren. Stattdessen oder zusätzlich kann der Benutzer des Körperbandes Chips seiner Wahl im oder am Körperband unterbringen.

Die Erfindung sowie weitere Aufgaben, Aspekte und Vorteile der Erfindung werden nun anhand von Ausführungsformen näher erläutert. In den Zeichnungen zeigen:
- Fig. 1: eine erste Ausführungsform der Erfindung in Form eines Körperbandes, in dem ein Chip untergebracht ist;
- Fig. 2: eine zweite Ausführungsform der Erfindung in Form eines Körperbandes mit Chipanhängern;
- Fig. 3: eine dritte Ausführungsform der Erfindung in Form einer Armbanduhr mit einem Armband, in dem Chips untergebracht sind;
- Fig. 4a bis 4c: schematisierte Darstellungen eines Abschnittes des in Fig. 3 gezeigten Armbandes mit einem Steckfach für einen Chip;
- Fig. 5: eine schematisierte Darstellung eines Abschnittes des in Fig. 3 gezeigten Armbandes mit einem mit Schwenkdeckel verschließbaren Einlegefach für einen Chip;
- Fig. 6: eine vierte Ausführungsform der Erfindung in Form einer Armbanduhr mit in das Armband integrierter Anzeigevorrichtung in Draufsicht;
- Fig. 7: die in Fig. 6 gezeigte Armbanduhr in Seitenansicht;
- Fig. 8 - 10: eine Ausführungsform der in Fig. 6 und 7 gezeigten Armbanduhr, deren Band aus zwei übereinander befindlichen Bandlagen zusammensetzbar ist; dabei sind dargestellt in

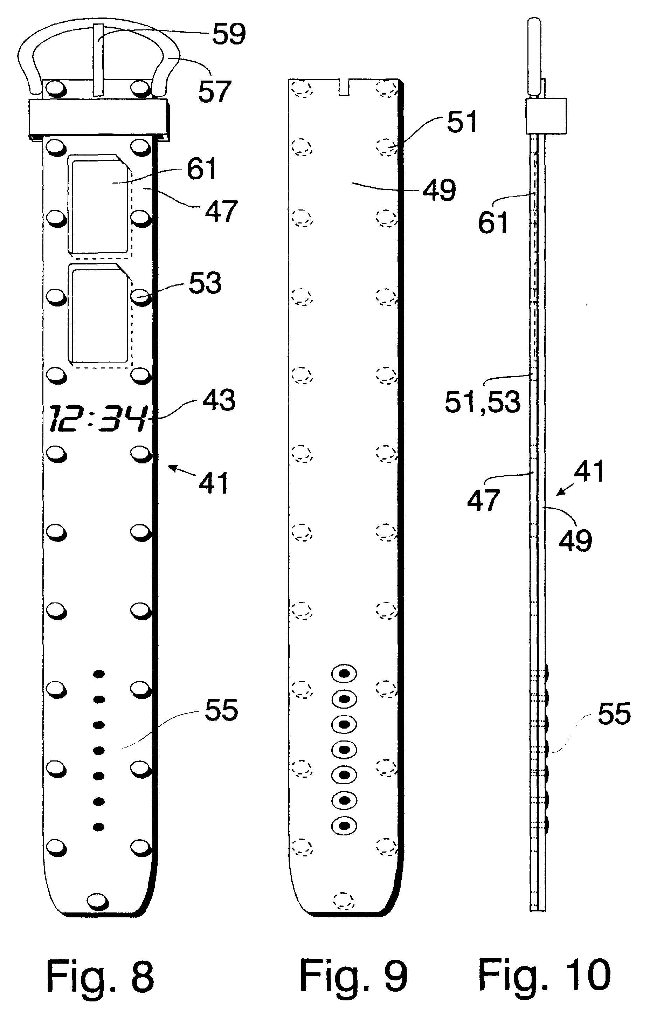

Fig. 8 eine erste Bandlage in Draufsicht;
Fig. 9 eine damit verrastbare zweite Bandlage in Draufsicht; und
Fig. 10 die aus beiden Bandlagen zusammengesetzte Armbanduhr in Seitenansicht;

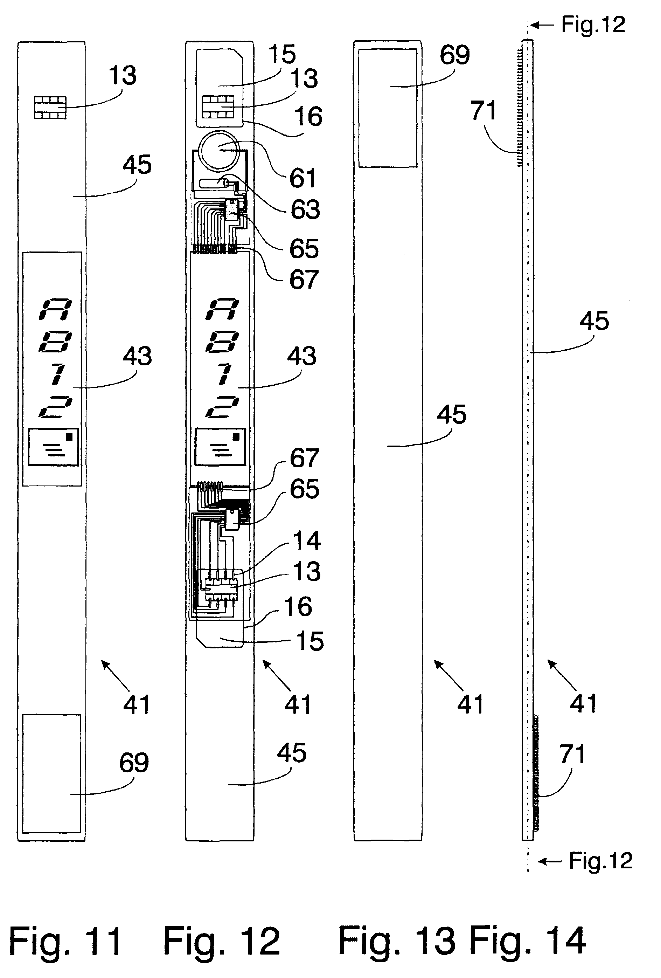

- Fig. 11: eine fünfte Ausführungsform der Erfindung in Form eines Armbandanzeigegerätes für beliebige Darstellungen;
- Fig. 12: eine Längsschnittdraufsicht des in Fig. 11 gezeigten Armbandanzeigegerätes entlang der Schnittlinie 12-12 in Fig. 14.
- Fig. 13: eine Unteransicht des in Fig. 11 gezeigten Armbandanzeigegerätes;
- Fig. 14: eine Seitenansicht des in Fig. 11 gezeigten Armbandanzeigegerätes, jedoch mit anderem Armbandverschluß; und

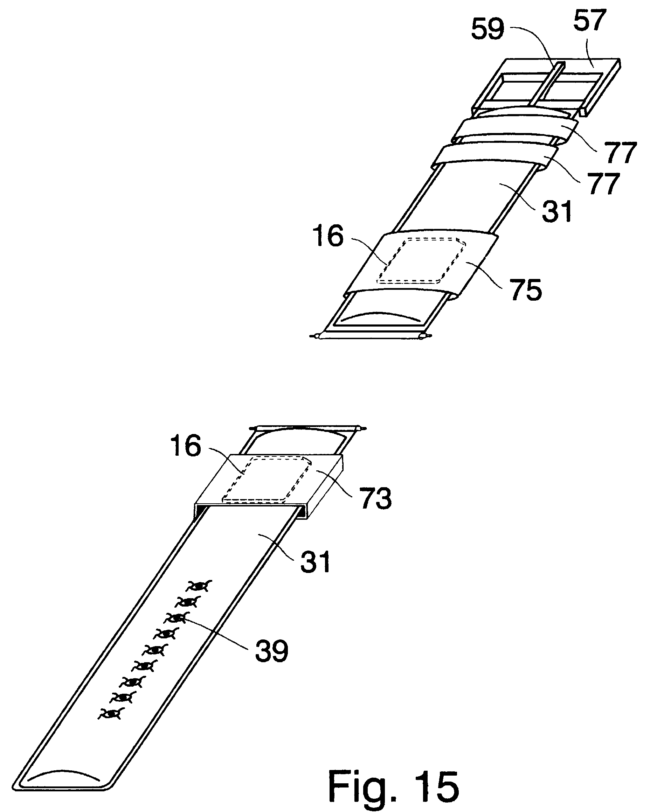

- Fig. 15: in perspektivischer Darstellung eine sechste Ausführungsform der Erfindung in Form eines Uhrenarmbandes mit daran montierten Schlaufenstücken mit Chipaufnahmevorrichtungen.

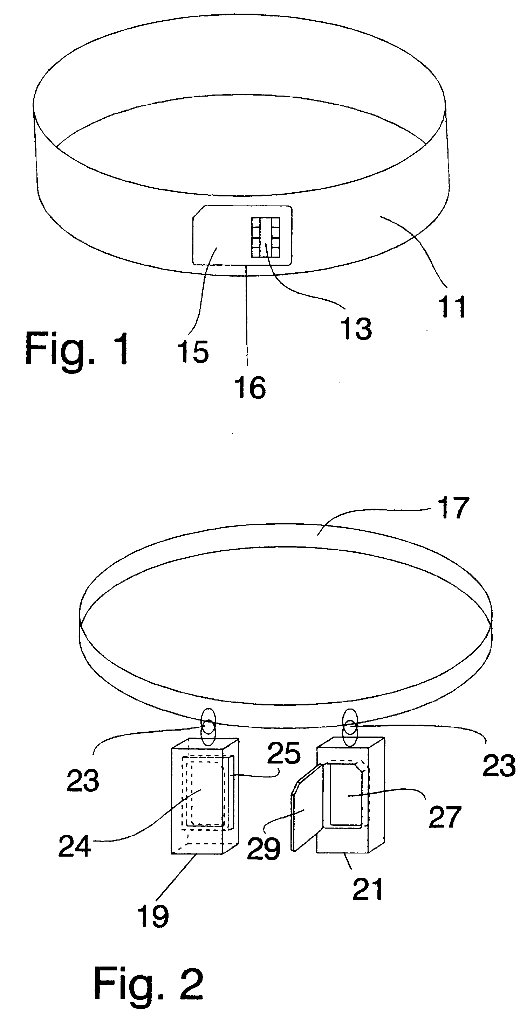

Bei der in Fig. 1 gezeigten ersten Ausführungsform der Erfindung handelt es sich um ein Körperband 11, beispielsweise ein Armband, Fußband oder Halsband, das von einer Person oder auch von einem Tier getragen werden kann und in dem ein Chip 13 untergebracht ist, der sich auf einem Chipträger 15 befindet. Die Form des Chipträgers 15 entspricht beispielsweise dem Standard für sogenannte SIM (Subscriber Identification Module), beispielsweise entsprechend der Formatnorm ID-000.

Das Körperband 11 kann aus beliebigem, vorzugsweise flexiblem, Material bestehen. Es kann verschlußlos sein, beispielsweise ein über die Hand auf den Arm aufschiebbares Armband. Es kann jedoch auch einen Verschluß zum Öffnen und Schließen des Körperbandes 11 aufweisen. Dabei kann es sich beispielsweise um eine Schließe mit Schließenlöchern und Schließendorn, einen Klettverschluß oder einen Magnetverschluß handeln. Hierzu folgen Erläuterungen später.

Zum Aufnehmen der Baueinheit aus Chip 13 und Chipträger 15 ist das Körperband 11 mit einer Aufnahmevorrichtung 16 versehen, in welche diese Baueinheit eingesetzt und erforderlichenfalls wieder herausgenommen werden kann. Beispiele für eine derartige Aufnahmevorrichtung 16 werden weiter unten angegeben und erläutert.

Der Einfachteit halber ist in Fig. 1 nur eine Aufnahmevorrichtung 16 für eine Baueinheit aus Chip 13 und Chipträger 15 dargestellt. Es können jedoch beliebig viele Aufnahmevorrichtungen entweder für lediglich gekapselte Chips oder für solche Baueinheiten mit einem Chip 13 und einem Chipträger 15 um den Umfang des Körperbandes 11 verteilt angeordnet sein.

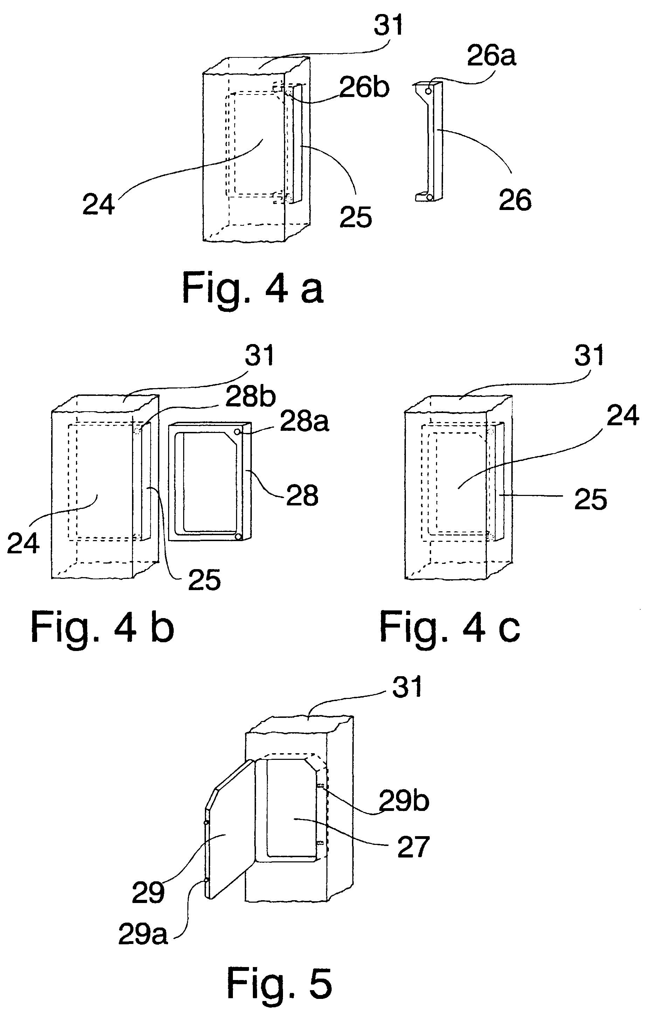

Die in Fig. 2 gezeigte zweite Ausführungsform der Erfindung verwendet zur Chipaufbewahrung nicht ein Körperband 17 selbst sondern Anhänger 19 und 21, welche mittels schematisch dargestellter Befestigungsvorrichtungen 23 am Körperband 17 befestigt sind. Die Anhänger 19 und 21 sind je als Aufnahmevorrichtung für einen Chip 13 bzw. eine Baueinheit aus Chip 13 und Chipträger 15 ausgebildet. Die Aufnahmevorrichtung des Anhängers 19 ist als Steckfach 24 ausgebildet, in welche ein Chip-Träger 15 mit Chip 13 von der Seite her über eine Einstecköffnung 25 einsteckbar ist. Diese kann mittels eines Verschlußstöpsels oder eines Chiptragrahmens verschlossen werden, wie dies im Zusammenhang mit den Figuren 4a bis 4c noch deutlicher wird, oder kann im Preßsitz in der Einstecköffnung 25 in sie verschließender Weise festgehalten werden kann. Die Aufnahmevorrichtung des Anhängers 21 ist als Einlegefach 27 ausgebildet, das mit Hilfe eines Schwenkdeckels 29 verschließbar ist. Der Schwenkdeckel 29 ist beispielsweise mittels eines Filmscharniers an dem Anhänger 21 schwenkbar befestigt und weist Rastmittel der im Zusammenhang mit Fig. 5 noch näher erläuterten Art auf, um das Einlegefach 27 bei in Schließstellung geschwenktem Schwenkdeckel 29 verschlossen zu halten.

Der Einfachteit halber sind in Fig. 2 nur zwei Chip-Anhänger dargestellt. Es kann auch eine größere Anzahl von Chip-Anhängern um den Umfang des Körperbandes 17 verteilt an diesem befestigt sein.

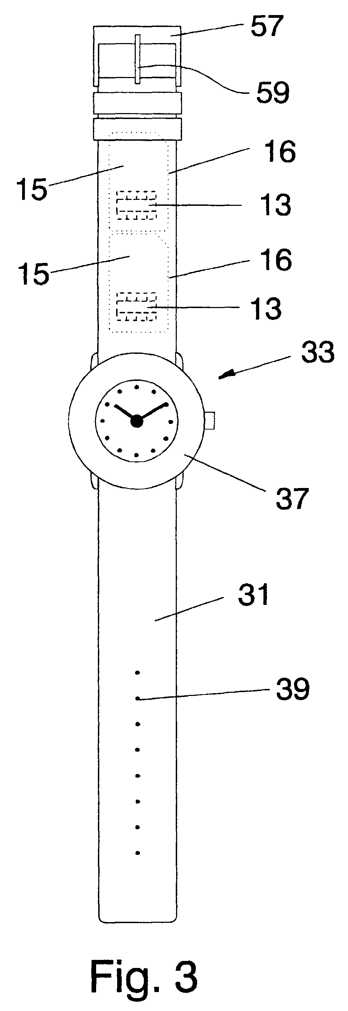

Fig. 3 zeigt eine dritte Ausführungsform der Erfindung, bei welcher ein Uhrenarmband 31 einer Armbanduhr 33 als Körperband mit Chip-Aufnahmevorrichtung dient. Dargestellt sind in Fig. 3 zwei Aufnahmevorrichtungen 16 für die Aufnahme je eines mit einem Chip 13 versehenen Chipträgers 15. Es könnten in diesem Armband 31 noch weitere Chipaufnahmevorrichtungen 16 gebildet werden, nämlich zwischen einem Uhrengehäuse 37 und Verschlußlöchern 39 des Uhrenarmbandes 31.

In den Fig. 4a bis 4c und 5 sind in schematischer Darstellung Abschnitte des Uhrenarmbandes 31 dargestellt, die je als Chip-Aufnahmevorrichtung ausgebildet sind. Dabei hat die in Fig. 4 gezeigte Chip-Aufnahmevorrichtung den gleichen Aufbau wie die Chip-Aufnahmevorrichtung des Chip-Anhängers 19. Die In Fig. 5 gezeigte Chip-Aufnahmevorrichtung hat den gleichen Aufbau wie die Chip-Aufnahmevorrichtung des Chip-Anhängers 21 in Fig. 2.

Bei der in Fig. 4a gezeigten Ausführungsform eines Steckfaches 24 wird die Einstecköffnung 25 nach dem Einstecken einer Baueinheit aus Chipträger 15 und Chip 13 mittels eines Verschlußstöpsels 26 geschlossen, der mittels einer Rastvorrichtung in Form von Rastvorsprüngen 26a am Verschlußstöpsel 26 und Rastöffnungen 26b im Bereich der Einstecköffnung 25 in der Einstecköffnung 25 verrastbar ist.

Bei der in den Fig. 4b und 4c gezeigten Ausführungsform eines Steckfaches 24 ist in die Einstecköffnung 25 ein Chiptragrahmen 28 einsteckbar und dort verrastbar, und zwar mittels Rastvorsprüngen 28a am Chiptragrahmen 28 und Rastöffnungen 28b im Bereich der Einstecköffnung 25. Der Chiptragrahmen 28 ist in Fig. 4b im nicht-gesteckten und in Fig. 4c im gesteckten Zustand dargestellt.

Bei dem in Fig. 5 gezeigten Einlegefach 27 ist der Schwenkdeckel 29 mittels an ihm angeordneter Rastvorsprünge 29a und komplementärer Rastöffnungen 29b im Uhrenarmband 31 in Schließstellung verrastbar.

Der in Fig. 2 gezeigten Anhänger 19 kann in der in Fig. 4a oder in der in den Fig. 4b und 4c dargestellten Weise ausgestaltet sein. Der in Fig. 2 gezeigte Anhänger 21 kann in der in Fig. 5 dargestellten Weise ausgebildet sein.

Bei Aufbau des Chip-Anhängers 19 bzw. des Uhrenarmbandes 31 mit flexiblem Kunststoff kann man an der Einstecköffnung 25 des Steckfachs 24 eine einstückig mit dem Chip-Anhänger 19 bzw. dem Uhrenarmband 31 ausgebildete (nicht dargestellte) Verschlußlippe anordnen, die beim Einstecken eines Chips 13 bzw. eines Chip-Trägers 15 in die Einstecköffnung 25 aus dem Einsteckweg des Chips 13 bzw. des Chip-Trägers 15 federnd nachgiebig herausgeschwenkt wird und nach vollständigem Einstecken des Chips 13 bzw. des Chip-Trägers 15 wieder in eine Verschlußstellung zurückschwenkt.

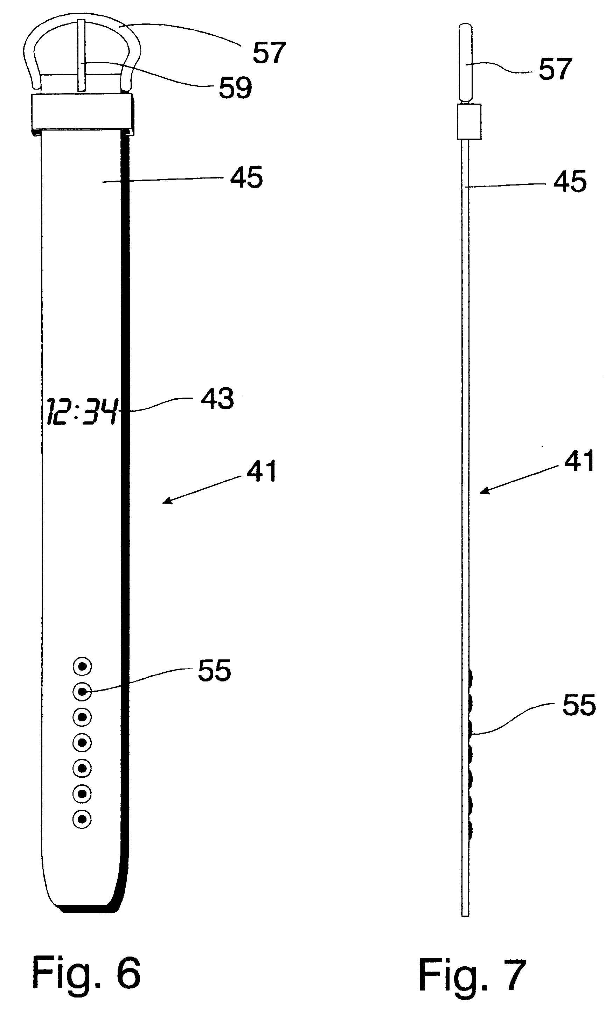

Die Fig. 6 und 7 zeigen eine vierte Ausführungsform eines erfindungsgemäßen Körperbandes in Form einer digital anzeigenden Armbanduhr, bei welcher eine Anzeigevorrichtung 43 in ein Uhrenarmband 45 integriert ist. Vorzugsweise besteht dieses Uhrenarmband 45 aus flexiblem Kunststoff und die Anzeigevorrichtung 43 kann ebenfalls aus flexiblem Material bestehen, z. B. in Form einer elektrooptischen LEP-Anzeigevorrichtung. Dabei steht LEP für Light Emitting Polymere. Ist die Anzeigevorrichtung derart in das Material des Uhrenarmbandes 45 eingebettet, daß sie vom Uhrenarmbandmaterial überdeckt wird, besteht mindestens dieser Überdeckungsbereich des Uhrenarmbandes 45 aus transparentem Material.

In der in den Figuren 8 bis 10 dargestellten Weise kann das Uhrenarmband 45 der in Fig. 6 gezeigten Armbanduhr 41 aus zwei Bandlagen 47 und 49 zusammengesetzt sein, die im übereinandergelegten Zustand mittels Rastnoppen 51 an der einen Bandlage 47 und Rastlöchern 53 an der anderen Bandlage 49 durch Verrastung miteinander verbindbar sind. Dabei zeigen die Figuren 8 und 9 in Draufsicht je eine der beiden Bandlagen 47 und 49 im voneinander getrennten Zustand. In Fig. 10 ist die aus den beiden Bandlagen 47 und 49 durch Rastverbindung zusammengefügte Armbanduhr 41 in Seitenansicht dargestellt. Bei der in den Figuren 8 - 10 dargestellten Ausführungsform ist die Bandlage 47 mit allen (nicht dargestellten) Uhrenfunktionsteilen und der Anzeigevorrichtung 43 sowie mit Verschlußlöchern 55 und einer Schließe 57 mit einem mit den Verschlußlöchern 55 zusammenwirkenden Verschlußdorn 59 versehen. Entlang der Bandlage 47 und/oder der Bandlage 49 können mehrere Aufnahmefächer 61 für die Aufnahme von Chips 13 bzw. mit Chips 13 versehenen Chipträgern 15 vorgesehen sein. Nach dem Einlegen von Chips 13 bzw. Chipträgern 15 in Aufnahmefächer 61 kann das Uhrenarmband 45 durch Aufeinanderlegen und Verrasten der beiden Bandlagen 47 und 49 geschlossen werden.

Man kann das Uhrenarmband 45 der in den Figuren 6 und 7 gezeigten Armbanduhr 41 jedoch auch einlagig und mit Aufnahmevorrichtungen der in den Fig. 4a bis 4c und 5 gezeigten Formen ausbilden.

Es besteht auch die Möglichkeit, Chips 13 oder mit Chips 13 bestückte Chipträger 15 bei der Herstellung des Uhrenarmbandes 15 in dieses einzuformen, beispielsweise bei einem Gieß- oder Spritzvorgang.

Die Fig. 11 bis 13 zeigen verschiedene Ansichten einer fünften Ausführungsform der Erfindung in Form eines Armbandanzeigegerätes für beliebige Darstellungen. Dabei sind in den Fig. 11 und 13 eine Draufsicht bzw. eine Unteransicht des Armbandanzeigegerätes gezeigt, während Fig. 12 eine Längsschnittdraufsicht zeigt, wenn das Armband 45 des Armbandanzeigegerätes entlang einer Schnittlinie aufgeschnitten ist, die in Fig. 14 als Schnittlinie 12-12 angedeutet ist.

Nähere Ausführungen zu einer derartigen Ausführungsform finden sich in der bereits genannten gleichzeitig eingereichten Patentanmeldung "In ein Armband integriertes Anzeigegerät" (mit dem Anwaltsaktenzeichen K 47 788/6), deren Offenbarungsgehalt durch ausdrückliche Bezugnahme zur Offenbarung auch der vorliegenden Patentanmeldung gemacht wird.

Die Draufsicht in Fig. 11 zeigt eine Anzeigevorrichtung 43 für eine beliebige Darstellung, beispielsweise von Buchstaben, Ziffern und beliebigen Bildern oder Symbolen. Am in Fig. 11 oberen Ende ist in dem Armband 45 ein Chip 13 derart untergebracht, daß Kontaktflächen dieses Chips 13 auf der Außenseite des Armbandes 49 freiliegen und in elektrischen Kontakt mit einem Lese- und/oder Schreibgerät gebracht werden können. Fig. 12 zeigt eine Chipaufnahmevorrichtung 16, in welche ein Chipträger 15 mit dem in Fig. 11 mindestens hinsichtlich seiner elektrischen Kontakte freiliegenden Chip 13 eingesetzt ist. Außerdem zeigt Fig. 12 "Innereien" des Armbandanzeigegerätes. Dazu gehören eine elektrische Energiequelle, beispielsweise in Form einer Uhrenbatterie 61, ein Schwingquarz 63 als Zeittatktgeber und eine elektrische integrierte Schaltung 65, die ein elektrisches Uhrenwerk und eine elektrische Treiberschaltung für die Anzeigevorrichtung 43 aufweist. Die integrierte Schaltung 65 ist über einen elektrischen Verbinder 67 mit der Anzeigevorrichtung 43 elektrisch verbunden.

Das in Fig. 12 gezeigte Armbandanzeigegerät ist außerdem mit einem weiteren Chip 13 versehen, dessen elektrische Kontakte 14 mit einer weiteren integrierten Schaltung 65 verbunden sind, welche eine Treiberschaltung für die Darstellung beliebiger Muster auf der Anzeigevorrichtung 43 darstellen kann. Die weitere integrierte Schaltung 65 ist über einen weiteren elektrischen Verbinder 67 mit der Anzeigevorrichtung 43 verbunden. Der mit der integrierten Schaltung 65 korrespondierende Chip 13 kann beispielsweise die Funktionen eines elektronischen Organizers umfassen. Dabei kann dieser Chip 13 entweder autark sein oder in berührungsloser Verbindung mit externen Signalquellen und/ Signalempfängern berührungslos kommunizieren.

Das Armband 45 des in den Fig. 11-13 gezeigten Armbandanzeigegerätes ist mit einem Magnetverschluß versehen. Zu diesem Zweck sind an entgegengesetzten Enden und auf unterschiedlichen Seiten des Armbandes 45 je ein plattenförmiges Magnetstück 69 angeordnet, wobei die beiden Magnetstücke 69 magnetisch entgegengesetzt gepolt sind, um sich magnetisch anzuziehen und Verschlußwirkung entfalten zu können.

Fig. 14 zeigt eine Modifikation des in den Fig. 11-13 gezeigten Anzeigegerätes hinsichtlich der Verschlußart. Bei der in Fig. 14 gezeigten Modifikation sind an dem Armband 45 anstelle von Magnetstücken 69 Klettverschlußelemente 71 angeordnet, die bei geschlossenem Armband 45 in Klettwirkung miteinander treten und das Armband 45 in Schließstellung halten.

Abgesehen von den Klettverschlußelementen 71 kann Fig. 14 als Seitenansicht des in den Fig. 11-13 gezeigten Anzeigegerätes dienen, mit der bereits im Zusammenhang mit den Fig. 11-13 erwähnten Schnittlinie 12-12.

Fig. 15 zeigt eine Ausführungsform eines Uhrenarmbandes (31), das für die Montage an einem (nicht dargestellten) Uhrengehäuse vorgesehen ist und auf das zwei schlauch- oder hülsenförmige Schlaufenstücke 73 und 75 mit je einer Chipaufnahmevorrichtung 16 aufgeschoben sind. Die beiden Schlaufenstücke 73 und 75 unterscheiden sich lediglich in ihrer Form und in ihrem Grad an Anpassung an die Form des Uhrenarmbandes 31.

Als Chipaufnahmevorrichtung könnte auch mindestens eine der beiden in Nachbarschaft der Schließe 57 angeordneten Bandhalteschlaufen 77 ausgebildet sein.

Die Schlaufenstücke 73 und 75 können aus starren, elastisch verformbaren oder unelastisch verformbaren Materialien bestehen, beispielsweise Kunststoff, Leder, Textil, Metall, Keramik oder ähnlichen Materialien.

Es sei noch einmal betont, daß in dem Körperband sowohl berührungslos als auch über elektrische Kontaktierung betreibbare Chips untergebracht werden können. Berührungslos betreibbare Chips können berührungslos mit externen Signalquellen und/oder Signalempfängern kommunizieren und können und von diesen auch berührungslos mit Betriebsenergie versorgt werden, beispielsweise auf induktivem Weg. Solche Chips sind beispielsweise in den in den Fig. 3 und 6 bis 8 gezeigten Körperbändern angeordnet. Ein Beispiel eines über elektrische Kontaktierung betreibbaren Chips ist in den Fig. 11 und 12 gezeigt.

## Patentansprüche

1. Körperband, das am menschlichen oder tierischen Körper zu tragen ist, mit mindestens einer Aufnahmevorrichtung (16; 24; 27; 61) zur Aufnahme mindestens eines Chips (13) mit integrierter elektrischer Schaltung, der über elektrische Kontakte oder berührungslos mit externen Signalquellen und/oder Signalempfängern in Signalaustausch bringbar ist.

2. Körperband nach Anspruch 1, bei welchem die Aufnahmevorrichtung (16; 24, 27; 61) für die Aufnahme eines gekapselten Chips (13) und/oder eines auf einem Chipträger (15) angeordneten Chips (13) bemessen ist.

3. Körperband nach Anspruch 1 oder 2, in Form eines Armbandes (11; 17; 31; 45) oder Halsbandes.

4. Körperband nach Anspruch 1, 2 oder 3, mit einer Aufnahmevorrichtung in Form mindestens eines Steckfaches (24), in welches der mindestens eine Chip (13) einsteckbar ist.

5. Körperband nach Anspruch 4, bei welchem das Steckfach (24) mindestens eine Einstecköffnung (25) aufweist, die mittels eines in der Einstecköffnung (25) verrastbaren Verschlußstöpsels (26) oder eines Chiptragrahmens (28) verschließbar ist.

6. Körperband nach Anspruch 1, 2 oder 3, mit einer Aufnahmevorrichtung in Form mindestens eines Einlegefaches (27).

7. Körperband nach Anspruch 6, bei welchem das Einlegefach (27) mittels eines Schwenkdeckels (29) verschließbar ist.

8. Körperband nach einem der Ansprüche 1 bis 7, bei welchem eine analoge und/oder digitale, ein- oder mehrfarbige Anzeigevorrichtung (33; 43) zur Darstellung von Zeitinformation und/oder beliebiger Information an dem Körperband (31; 45) angeordnet oder in das Körperband (31;45) integriert ist.

9. Körperband nach Anspruch 9, bei welchem mindestens ein in dem Körperband (11; 17; 31; 45) aufgenommener Chip (13) über elektrische Kontakte (14) oder berührungslos mit der Anzeigevorrichtung (33; 43) in Funktionsverbindung bringbar ist.

10. An einem Körperband anbringbarer Anhänger (19, 21) mit mindestens einer Aufnahmevorrichtung (24; 27) zur Aufnahme mindestens eines Chips (13) mit integrierter elektrischer Schaltung, der über elektrische Kontakte oder berührungslos mit externen Signalquellen und/oder Signalempfängern in Signalaustausch bringbar ist.

11. Auf ein Körperband aufmontierbares, das Körperband mindestens teilweise umgreifendes, ringförmig geschlossenes oder offenes Schlaufenstück (73,75) mit mindestens einer Aufnahmevorrichtung (16) zur Aufnahme mindestens eines Chips (13) mit integrierter elektrischer Schaltung, der über elektrische Kontakte oder berührungslos mit externen Signalquellen und/oder Signalempfängern in Signalaustausch bringbar ist.

12. Körperband nach einem der Ansprüche 1 bis 11 mit einem Anhänger nach Anspruch 10 oder einem Schlaufenstück nach Anspruch 11.

13. Körperband nach Anspruch 12, bei welchem mindestens ein in dem Anhänger (19, 21) oder Schlaufenstück (73, 75) aufgenommener Chip (13) über elektrische Kontakte (14) oder berührungslos mit der Anzeigevorrichtung (33; 43) in Funktionsverbindung bringbar ist.
